# DEMANDE DE BREVET EUROPEEN

(11) **EP 1 593 566 A1**
(43) Date de publication de la demande: **09.11.2005**
(21) Numéro de dépôt: 04291125.5
(22) Date de dépôt: 03.05.2004
(51) Int. Cl.: B60T 7/12, B60T 7/10, B60T 13/74, B60T 8/00

(54) **Fonction d'assistance à la conduite pour un véhicule immobilisé sur une pente**

(71) Demandeur: Delphi Technologies, Inc., Troy, MI 48007 (US); Peugeot Citroen Automobiles SA, 78140 Vélizy Villacoublay (FR)
(72) Inventeur: Alvarez, Belen, 75015 Paris (FR); Groult, Xavier, 95470 Survilliers (FR); Delplace, Rémy, 90400 Danjoutin (FR)
(74) Mandataire: Abello, Michel

(57) **Abrégé**

Procédé d'assistance à la conduite d'un véhicule équipé d'un système de freinage comportant des étriers de frein aptes à être actionnés en fonction d'une force de freinage cible. Le procédé comporte les étapes consistant à:
- déterminer un état instantané du véhicule défini par des variables d'état mesurées par des capteurs équipant le véhicule;
- tester une condition logique d'entrée vérifiée lorsque la vitesse du véhicule est nulle, lorsque la pente est supérieure à une pente prédéfinie et une condition de position de levier de vitesses indique que ledit véhicule monte ladite pente; et, actionner automatiquement le système de freinage lorsque la condition logique d'entrée est vérifiée;
- tester une condition logique de sortie; et,
- mantenir l'actionnement du système de freinage pour maintenir le véhicule statique sur la pente en, tant que ladite condition logique de sortie n'est pas vérifiée; et,
- relâcher automatiquement l'actionnement du système de freinage lorsque la condition logique de sortie est vérifiée.

## Description

L'invention est relative à un procédé d'assistance à la conduite. Plus particulièrement, l'invention est relative à un procédé d'assistance à la conduite lorsque le véhicule considéré se trouve sur une pente.

La conduite d'un véhicule sur une pente est une opération délicate qui nécessite en particulier que, dès que le véhicule est à l'arrêt, le conducteur maintienne la pédale de frein enfoncée. Certaines opérations nécessitent ensuite de relâcher l'actionnement de la pédale de frein. En particulier le redémarrage du véhicule pour monter la pente.

Cette dernière opération est complexe puisqu'il faut passer de l'actionnement de la pédale de frein à celui de la pédale d'accélérateur, tout en actionnant la pédale d'embrayage pour trouver le point de patinage. Souvent cette opération stressante pour le conducteur est ratée conduisant au calage du moteur et à un déplacement du véhicule vers le bas de la pente qui peut être préjudiciable.

Le document EP-1352798-A1 divulgue un procédé de gestion du stationnement destiné à placer un véhicule dans un état de stationnement stable sans intervention du conducteur. Ce procédé n'est pas exclusivement restreint au cas d'une chaussée en pente. D'une manière générale, dès la réalisation d'une première condition, le procédé consiste en une première opération de freinage par actionnement d'un système dynamique, puis dès la réalisation d'une seconde condition, le procédé se poursuit par une deuxième opération de freinage par actionnement d'un système de freinage statique. Dans un cas particulier, lorsque le véhicule est à l'arrêt une opération de mesure de la durée qui s'est écoulée depuis que le véhicule est immobilisé permet de déclancher la première opération après une première durée prédéterminée et de déclancher la seconde opération après une seconde durée prédéterminée. En appuyant sur la pédale d'accélération, le conducteur entraîne une opération de libération du véhicule en désactivant le système de freinage statique tout en activant le système de freinage dynamique, puis en désactivant progressivement le système de freinage dynamique. Les forces de freinage appliquées par les systèmes de freinages sont éventuellement modulables en fonction de la pente.

Ce document n'aborde pas le problème de l'immobilisation pour un redémarrage éventuel, soit vers le haut soit vers le bas de la pente.

L'invention a donc pour but de résoudre les inconvénients précités.

L'invention a pour objet un procédé d'assistance à la conduite d'un véhicule, le véhicule étant équipé d'un système de freinage comportant des étriers de frein et/ou un frein de parking aptes à être actionnés en fonction d'une force de freinage cible, le procédé étant caractérisé en ce qu'il comporte les étapes consistant à :
- déterminer un état instantané du véhicule défini par une pluralité de variables d'état dont les valeurs respectives sont obtenues à partir de mesures effectuées au moyen de capteurs équipant le véhicule ;
- tester une condition logique d'entrée traduisant que l'état instantané correspond à un état d'entrée, par la vérification simultanée d'une pluralité de conditions d'entrée comportant au moins une condition d'entrée de vitesse vérifiée lorsque la vitesse du véhicule est supérieure à une vitesse seuil, une condition d'entrée de pente (E1) vérifiée lorsque la pente est supérieure à une pente prédéfinie et une condition de position de levier de vitesses vérifiée lorsque la position d'un levier de vitesses indique que le véhicule monte la pente; et, lorsque la condition logique d'entrée est vérifiée,
- tester une condition logique de sortie traduisant que l'état instantané correspond à un état de sortie, par la vérification de conditions de sortie ; et,
- actionner automatiquement le système de freinage pour maintenir le véhicule statique sur la pente, tant que la condition logique de sortie n'est pas vérifiée ; et,
- relâcher automatiquement l'actionnement du système de freinage lorsque la condition logique de sortie est vérifiée.

De préférence, la pluralité de conditions d'entrée comporte une condition d'entrée de couple qui est vérifiée lorsqu'un couple moteur est inférieur à un couple moteur seuil.

Dans un mode de réalisation la pluralité de conditions d'entrée comporte une condition d'entrée d'actionnement de la pédale de frein qui est vérifiée lorsqu'une force de freinage requise par le conducteur permet de maintenir le véhicule sur la pente, l'étape d'actionnement du système de freinage débutant uniquement lorsqu'il est détecté en une étape de détection que le conducteur relâche la pédale de frein.

De préférence, lorsque la condition logique d'entrée est vérifiée le procédé comporte une étape de mesure de la valeur instantanée de la pente ; et, une étape de calcule d'une force de freinage théorique apte à maintenir le véhicule sur la pente, l'étape d'actionnement automatique du système de freinage étant réalisée en émettant ladite force de freinage théorique en tant que force de freinage cible.

Dans un mode de réalisation, dès que la condition logique d'entrée est vérifiée, une étape d'acquisition de la valeur de la force de freinage requise par le conducteur en tant que force de freinage théorique, l'étape d'actionnement automatiquement du système de frein étant réalisée en émettant la valeur de la force de freinage théorique en tant que force de freinage cible.

De préférence, le procédé comporte les étapes consistant à déterminer l'instant initial du début de l'étape d'actionnement automatique dudit système de frein et à comparer, à chaque instant, la durée qui s'est écoulée depuis ledit instant initial à une durée seuil dite de latence.

Dans un mode de réalisation, lorsque la durée est supérieure à ladite durée seuil qui est une première durée seuil, et le procédé comporte l'actionnement automatique d'un frein de parking dont est équipé ledit véhicule.

De préférence, la condition logique de sortie comporte un condition de sortie temporelle qui est vérifiée lorsque la durée est supérieure à la durée seuil qui est une troisième durée seuil, et en ce que le procédé se poursuit par le relâchement progressif du système de freinage.

De préférence, la condition logique de sortie comporte une condition logique de sortie vers le haut traduisant une volonté du conducteur de monter la pente, la condition logique de sortie vers le haut étant définie par la vérification d'une pluralité de conditions de sortie vers le haut comportant au moins une condition de sortie vers le haut de position de levier de vitesses qui est vérifiée lorsque le produit de la position du levier de vitesses mesurée par un capteur de position de levier de vitesses par le signe de la pente est strictement positif.

De préférence, la pluralité de conditions de sortie vers le haut comporte une condition de sortie vers le haut d'accélération qui est vérifiée lorsque la valeur de la position de la pédale d'accélérateur mesurée par un capteur de position de la pédale d'accélérateur est supérieure à une position de référence, et une condition de sortie vers le haut de couple moteur qui est vérifiée lorsque qu'un couple moteur effectivement atteint pas le moteur dudit véhicule est supérieur à un couple moteur théorique évalué dans une étape de détermination d'un couple moteur théorique consistant à calculer, en fonction de la pente, ledit couple moteur théorique apte à maintenir à lui seul ledit véhicule statique sur ladite pente.

De préférence, la pluralité de conditions de sortie vers le haut comporte une condition de sortie vers le haut d'embrayage vérifiée lorsque la position de l'embrayage donnée par un capteur de position d'embrayage correspond à une position de point de patinage ou à une position totalement embrayée.

De préférence, la condition logique de sortie comporte une condition de sortie vers le bas traduisant une volonté du conducteur de descendre la pente, la condition logique de sortie vers le bas étant définie par la vérification d'une pluralité de conditions de sortie vers le bas comportant au moins une condition de sortie vers le bas de position de levier de vitesses qui est vérifiée lorsque le produit de la position du levier de vitesses mesurée par un capteur de position de levier de vitesses par le signe de la pente est strictement négatif.

De préférence, dans l'étape de relâchement automatique de l'actionnement du système de freinage la force de freinage est réduite progressivement vers la valeur nulle.

L'invention a également pour objet un logiciel d'assistance à la conduite contenant des instructions propres à être lues et stockées sur un support, lesdites instructions étant exécutables par un ordinateur hôte, caractérisé en ce que ledit logiciel met en oeuvre un procédé tel que ceux décrits ci-dessus.

L'invention a également pour objet un contrôleur de freinage programmable, apte à mettre en oeuvre un procédé tel que ceux décrits ci-dessus dans un système de freinage d'un véhicule, comportant un espace mémoire apte à stocker des instructions d'un programme, un calculateur apte à exécuter lesdites instructions et une interface d'entrée/sortie connectable en entrée à une pluralité de capteurs dont est équipé ledit véhicule, et en sortie à au moins une unité d'actionnement d'étrier de frein dudit système de freinage, caractérisé en ce que ledit contrôleur est programmé pour comporter :
- un moyen de détermination d'un état instantané dudit véhicule, état défini par au moins une variable d'état obtenue à partir de mesures effectuées au moyen dudit au moins un capteur ;
- un moyen de test d'une condition logique d'entrée apte à éprouver si ledit état instantané vérifie une condition logique d'entrée ;
- un moyen de test d'une condition logique de sortie apte à éprouver si ledit état instantané vérifie une condition logique de sortie ;
- un moyen de génération et d'émission en sortie d'une valeur de force de freinage en tant que force de freinage cible ; et,
- un moyen d'incrémentation temps réel d'une variable temporelle.

L'invention a également pour objet un système de freinage destiné à équiper un véhicule comportant une pluralité de capteurs, un contrôleur de freinage, et des unités d'actionnement d'étriers de frein, caractérisé en ce que ledit contrôleur de freinage est un contrôleur tel que celui décrit ci-dessus.

De préférence, le système de freinage comporte au moins des étriers de frein électromécaniques destinés à équiper des roues arrière dudit véhicule.

L'invention a également pour objet un véhicule comportant un système de freinage caractérisé en ce que ledit système de freinage est un système de freinage tel que ceux décrits ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 représente schématiquement un véhicule équipé d'un système de freinage hybride ;
- les figures 2a et 2b représentent, sous la forme d'un algorithme, les différentes étapes du mode de réalisation préféré du procédé d'assistance à la conduite selon l'invention, mis en oeuvre sous forme logicielle dans le véhicule de la figure 1 ; et,
- la figure 3 montre un autre mode de réalisation du procédé d'assistance selon l'invention.

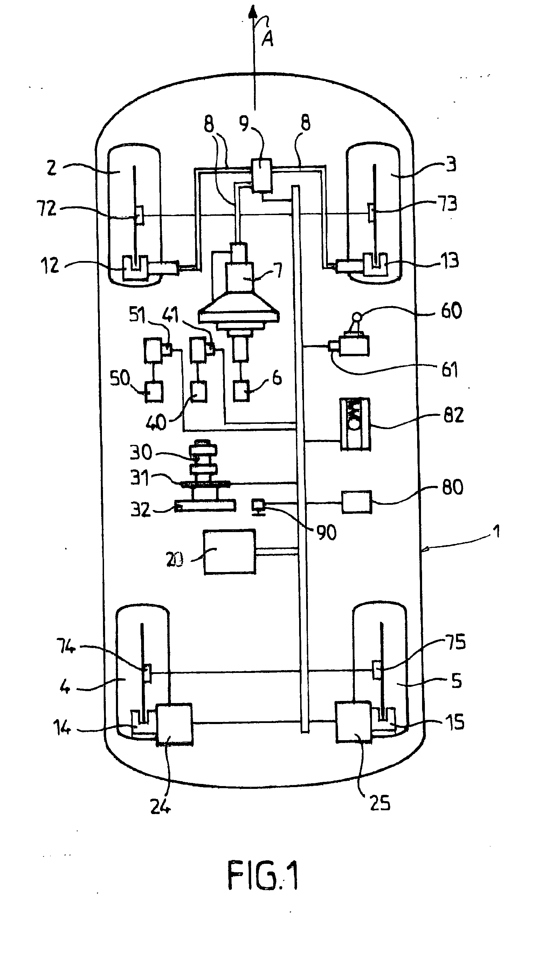

Bien que le procédé d'assistance selon l'invention puisse être mis en oeuvre quel que soit le type du système de freinage équipant le véhicule, dans le mode de réalisation actuellement préféré le véhicule est équipé d'un système de freinage hybride tel qu'il va maintenant être décrit en détail en rapport avec la figure 1.

Un véhicule 1 comporte deux roues avant 2 et 3 et deux roues arrière 4 et 5. Le système de freinage hybride comporte une pédale de frein 6 reliée à un maître cylindre 7. Lorsque la pédale de frein 5 est enfoncée, le maître cylindre 7 génère une surpression hydraulique qui est propagée via l'unité hydraulique 9 et les canalisations 8 vers les étriers de frein hydrauliques 12 et 13 équipant respectivement les roues avant 2 et 3.

Les roues arrière 4 et 5 sont respectivement équipées d'étriers électromécaniques 14 et 15. Lorsque le conducteur appuie sur la pédale de frein 6, l'unité hydraulique 9 émet également un signal électrique proportionnel à la surpression générée par le maître cylindre 7, indiquant la force freinage F_{C} requise par le conducteur. Ce signal électrique est reçu par un contrôleur de freinage 20. Le contrôleur de freinage 20 comporte au moins un calculateur et une mémoire aptes, entre autre, à stocker des programmes comportant une série d'instructions exécutables par le calculateur du contrôleur 20. Le contrôleur 20 comporte une interface d'entrée/sortie permettant en entrée l'acquisition de signaux provenant de capteurs et le stockage des valeurs correspondantes dans des espaces mémoire et permettant en sortie l'émission de signaux en sortie en fonction de valeurs lues dans l'espace mémoire. En réponse à ce signal, le contrôleur 20 calcule à chaque instant des forces de freinage cibles droite et gauche devant être respectivement appliquées par les étriers électromécaniques 14 et 15 équipant les roues arrières 4 et 5. Puis le contrôleur 20 émet des signaux de commande correspondant aux forces de freinage cibles droite et gauche en direction de calculateurs déportés 24 et 25 qui régulent respectivement l'actionnement d'un étrier électromécanique. Ils ajustent la valeur en amplitude et en phase de l'intensité du courant alimentant le moteur équipant l'étrier de frein électromécanique. L'intensité du courant provient d'une batterie et d'un alternateur non représentés.

Par ailleurs, le véhicule 1 est équipé d'une pluralité de capteurs permettant de mesurer la valeur instantanée de différentes variables, de manière à définir un état instantané du véhicule.

La colonne de direction 30 est, par exemple, équipée d'un capteur 31 permettant de mesurer l'angle de braquage que le conducteur donne au volant 32.

La pédale d'accélération 40 comporte un capteur 41 permettant de mesurer le degré d'enfoncement de la pédale d'accélération. Le capteur 41 peut être un capteur continu. Le capteur 41 est de préférence discret et possède par exemple deux positions. Il émet un signal binaire FLAG2 prenant la valeur nulle lorsque le conducteur n'appuie pas sur la pédale d'accélération, ou tout au moins en dessous d'une valeur d'enfoncement seuil prédéfinie, et la valeur unité lorsque le conducteur appuie sur la pédale d'accélération de manière à l'enfoncer cette dernière au delà de ladite valeur d'enfoncement seuil.

La pédale d'embrayage 50 comporte un capteur 51. Le capteur 51 peut être un capteur continu. De préférence, ne serait ce que pour limiter les coûts, le capteur 51 est un capteur discret par exemple à trois positions : une première position correspond à l'émission d'un signal FLAG3 de valeur unité lorsque le conducteur n'appuie pas sur la pédale d'embrayage 50, le moteur étant couplé aux roues ; une deuxième position correspond à l'émission d'un signal FLAG3 de valeur nulle lorsque le conducteur appuie sur la pédale d'embrayage 50 de manière à être au point de patinage ; enfin, le capteur 51 peut être dans une troisième position, le signal FLAG3 prend alors une valeur unité marquée d'un signe négatif. Cette dernière position correspond au cas où la pédale d'embrayage est enfoncée au-delà du point de patinage, le moteur étant alors découplé des roues motrices.

Le véhicule 1, s'il comporte une boîte de vitesses manuelle 60, peut être équipé d'un capteur 61 permettant de connaître la position du levier de vitesses. De manière avantageuse, le capteur 61 est un capteur discret optique possédant plusieurs positions : la première position correspond à la marche arrière, c'est-à-dire à un possible déplacement du véhicule dans le sens inverse de son axe longitudinal A. La valeur du signal de sortie FLAG1 est par exemple -1. Lorsque le levier de vitesses est dans la position neutre ou point mort, le capteur 61 émet un signal de sortie FLAG1 dont la valeur est 0. Enfin, lorsqu'une marche avant est passée, c'est-à-dire un possible déplacement du véhicule dans le sens de son axe longitudinal A, le capteur 61 émet un signal FLAG1 de valeur +1.

Le véhicule 1 comporte, en outre, une pluralité de capteurs permettant de déterminer l'état cinématique du véhicule. Chacune des roues 2-5 est équipée d'un capteur de vitesse de roue 72-75. Un capteur de vitesse de roue permet de mesurer la vitesse instantanée de rotation de la roue qu'il équipe. Cette information permet au contrôleur 20 de calculer une vitesse instantanée V du véhicule. Pour mesurer l'accélération, le véhicule 1 comporte par exemple un capteur d'accélération latérale 80 et un capteur d'accélération longitudinale 82.

Le contrôleur de freinage peut comporter un procédé d'estimation de la pente sur laquelle se situe le véhicule. Une pente instantané p peut être calculée de la manière suivante. Dans un premier temps une vitesse longitudinale instantanée v du véhicule est calculée à partir des vitesse de rotation des roues mesurées par les capteurs 72 à 75. Si les capteurs de vitesse de roue sont des capteurs signés, la vitesse v est une valeur algébrique. La vitesse v obtenue est ensuite dérivée par rapport au temps pour obtenir une valeur d'accélération longitudinal instantanée a. Dans un deuxième temps, un signal s de différence est calculée par différence entre l'accélération a calculée et la valeur algébrique de l'accélération longitudinale mesurée par le capteur 82. Enfin, la pente p est obtenue par la formule p=tg(arcsin(s/g)) où g est l'accélération de la gravité. La pente p ainsi obtenue est une grandeur algébrique : par exemple si p est supérieure à zéro, le véhicule se trouve orienté le long de la pente, capot vers le haut ; si p est inférieure à zéro, le véhicule se trouve orienté le long de la pente, capot vers le bas.

Les différents capteurs qui viennent d'être décrits sont connectés au contrôleur 20, via un réseau supportant par exemple le protocole CAN-Bus.

Le véhicule 1 comporte un interrupteur 90 disposé au siège du conducteur, par exemple sur le tableau de bord. En pressant l'interrupteur 90 le conducteur déclenche l'exécution du programme d'assistance de manière à permettre l'a fonction d'assistance proprement dite d'être active ou de ne pas l'être.

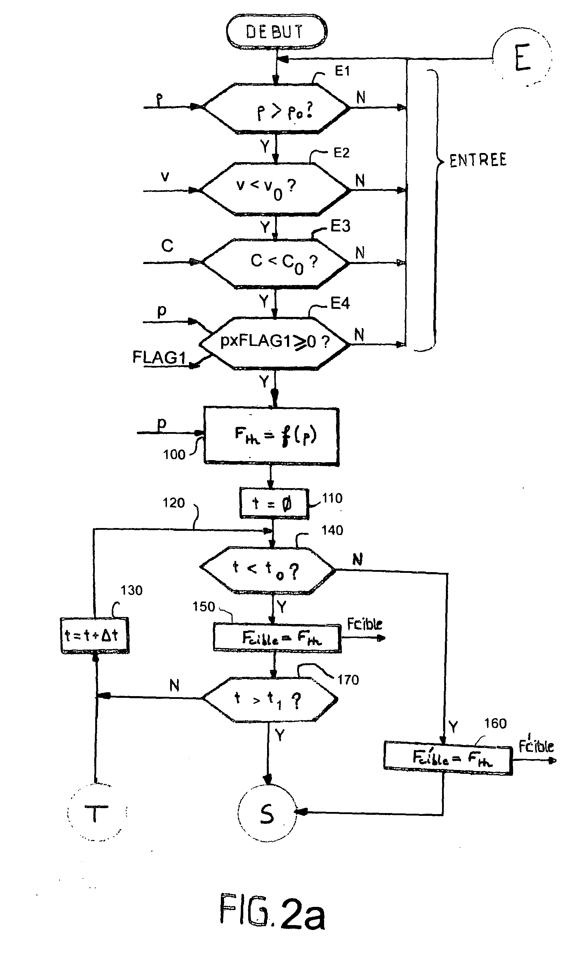

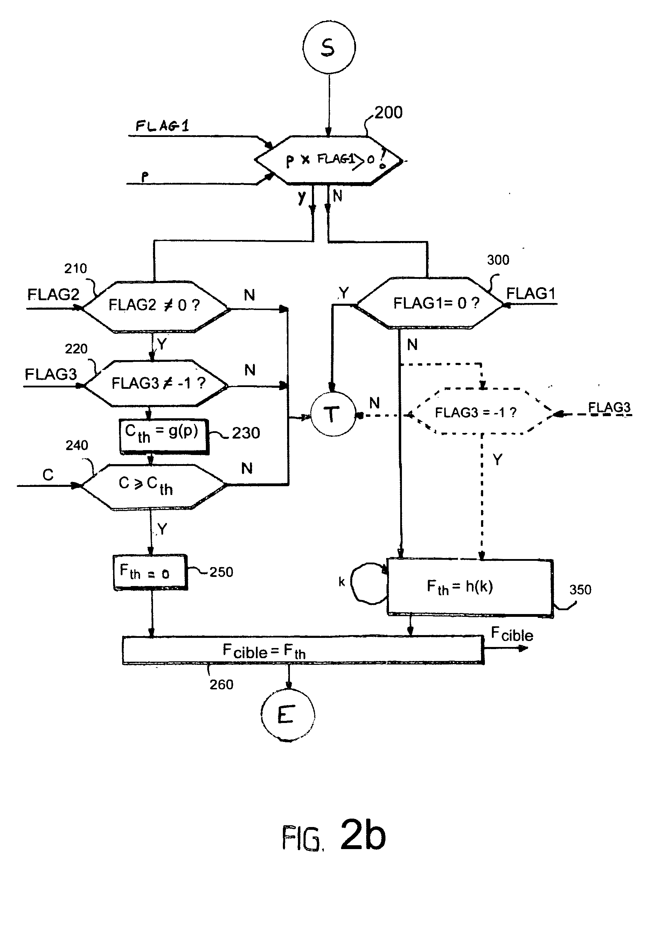

Les figures 2a et 2b représentent sous la forme d'un organigramme le mode de réalisation actuellement préféré du procédé d'assistance à la conduite d'un véhicule du type décrit à la figure 1.

Le procédé selon l'invention est, de préférence, mis en oeuvre par un programme d'assistance dont les instructions, mémorisées dans une mémoire du contrôleur de freinage, sont exécutées par le processeur dudit contrôleur de freinage.

A la figure 2a, l'exécution du programme d'assistance débute lorsque le conducteur sélectionne la fonction d'assistance au moyen par exemple de l'interrupteur 90.

Le programme commence par le test d'une condition logique d'entrée. Cette condition logique traduit que l'état instantané du véhicule correspond à un état dit d'entrée, dans lequel le programme prend la main sur la gestion du système de freinage.

Dans le mode de réalisation actuellement préféré, la condition logique d'entrée est constituée par la vérification simultanée des conditions d'entrée élémentaires :
- Une condition d'entrée de pente E1 consistant à comparer la valeur instantanée de la pente mesurée par un capteur de pente à une pente prédéfinie p₀. La condition d'entrée de pente est vérifiée lorsque la pente est supérieure à cette pente prédéfinie p₀indiquant que le véhicule se trouve sur une pente ;
- Une condition d'entrée de vitesse E2 consistant à comparer la valeur instantanée de la vitesse du véhicule à une vitesse seuil V₀ prédéfinie dont la valeur est faible par exemple de 1 km/h. La condition d'entrée de vitesse est vérifiée lorsque la vitesse v du véhicule est inférieure à la vitesse seuil V₀;
- Une condition d'entrée de couple E3 consistant à comparer la valeur instantanée du couple moteur C, demandé par le conducteur, à un couple moteur seuil C₀ prédéfini. La condition d'entrée de couple est vérifiée lorsque le couple C est inférieur au couple seuil C₀ ; et,
- Une condition de levier de vitesse E4 consistant à multiplier la valeur du signal FLAG1, donnée par le capteur de position de levier de vitesses, par la pente p, ou tout au moins le signe de la pente p. La condition de levier de vitesses est vérifiée lorsque le résultat de cette multiplication est supérieur ou égal à zéro, indiquant que le levier de vitesses est sur la position point mort, dans une position de marche avant lorsque la pente p est positive et dans une position de marche arrière lorsque la pente est négative, traduisant que le véhicule monte la pente.

Lorsque l'une de ces conditions d'entrée n'est pas vérifiée, le programme boucle vers le début de son exécution. En revanche, lorsque ces différentes conditions d'entrée sont simultanément vérifiées, la condition logique d'entrée est elle-même vérifiée et le programme prend la main sur le système de freinage. Lorsque le véhicule est dans l'état d'entrée, il va s'immobiliser sur la pente et se trouver à l'arrêt. Il s'agit donc d'actionner le système de freinage de manière à maintenir le véhicule statique sur la pente.

A l'étape 100, le contrôleur de freinage calcule une force de freinage théorique Fₜₕ permettant de maintenir le véhicule statique sur la pente. Afin de calculer cette force de freinage théorique Fₜₕ, le programme utilise la valeur instantanée de la pente déterminée comme cela à par exemple été décrit ci-dessus. La force Fₜₕ est une fonction de la pente p. La mémoire du contrôleur 20 comporte une série de courbes de calibration qui donnent la valeur recommandée de la force de freinage en fonction d'une valeur de pente. La série de courbes de calibration peut être indexée par des paramètres tels que la température des freins, la masse actualisée du véhicule, etc. En fonction de la valeur instantanée de la pente p et des paramètres d'indexation, la courbe de calibration adaptée permet de lire une valeur de la force de freinage affectée à la variable de force de freinage théorique Fₜₕ.

A l'étape 110, une variable temporelle t est initialisée. L'exécution du programme entre alors dans une boucle 120 indexée par t. A chaque itération de la boucle 120, la variable temporelle t est incrémentée, en temps réel, d'une durée Δt prédéfinie (étape 130). La variable temporelle t agit comme une sorte de chronomètre et mesure le temps qui s'est écoulé depuis que le véhicule se trouve dans l'état d'entrée et que le programme a pris la main sur le système de freinage.

A l'étape 140, la valeur de la variable t est comparée à une première durée prédéterminée t₀ correspondant à une durée de latence. Lorsque t est inférieure à cette première durée seuil t₀, le programme passe à une étape 150 dans laquelle la valeur de la force de freinage théorique Fₜₕ calculée à l'étape 100 est affectée à la variable force de freinage cible F_{cible} qui est ensuite émise en direction du système de freinage de manière à actionner de façon adaptée les étriers de frein.

Lorsqu'à l'étape 140, t n'est pas inférieure à la première durée seuil t₀, c'est-à-dire que t est supérieure ou égale à t₀, l'exécution du programme passe à une étape 160 permettant d'actionner le frein de parking du système de freinage. La valeur de la force de freinage théorique Fₜₕ calculée à l'étape 100 est alors affectée à une variable F'_{cible} qui est émise en direction dudit frein de parking. Il est à noter que cet actionnement du frein de parking est optionnel, mais fait partie du mode de réalisation préféré de la présente invention.

A l'étape 170, à la suite de l'étape 150 d'actionnement des étriers de frein arrière, la valeur de la variable temporelle t, donnant la durée écoulées depuis l'actionnement du système de freinage, est comparée à une deuxième durée seuil t₁, inférieure à t₀. Tant que t est inférieure à t₁, l'étape 170 conduit à l'étape 130 d'incrémentation de t. En restant ainsi dans la boucle 120, la force de freinage cible est appliquée continuement, conduisant au maintien de véhicule sur la pente au moins pendant une durée t₁.

A la suite, soit de l'actionnement des étriers pendant t₁ soit de l'actionnement du frein de parking, l'exécution du programme passe, en S, au test d'une condition logique de sortie. Lorsque cette condition logique de sortie est vérifiée, l'état instantané du véhicule correspond à un état de sortie pour lequel l'actionnement automatique du système de freinage n'est plus requis, le conducteur souhaitant redémarrer le véhicule soit vers le haut de la pente, soit vers le bas de la pente. Lorsque la condition logique de sortie est vérifiée, il faut alors relâcher automatiquement l'actionnement du système de freinage.

L'exécution du programme se poursuit par l'étape 200 (figure 2b) qui permet de savoir si le conducteur souhaite redémarrer le véhicule vers le haut de la pente ou vers le bas de la pente, et ceci quelle que soit l'orientation effective du véhicule dans la pente. L'étape 200 acquiert la valeur instantanée de la pente p ainsi que la valeur instantanée FLAG1 de la position du levier de vitesses 60 donnée par le capteur 61. A l'étape 200, le produit de la position du levier de vitesses FLAG1 par la pente p, ou par le signe de la pente p, est calculé et est comparé à la valeur nulle. Lorsque ce produit est supérieur à 0, c'est-à-dire positif, une condition de sortie vers le haut de position de levier de vitesses est vérifiée, indiquant une volonté de monter la pente. En revanche, lorsque ce produit est négatif ou nul, une condition de sortie vers le bas de position de levier de vitesses est vérifiée, indiquant une volonté de descendre la pente.

Lorsque le résultat de l'étape 200 traduit une volonté du conducteur de monter la pente, une pluralité d'autres conditions de sortie vers le haut sont vérifiées de manière à définir une condition logique de sortie vers le haut. A l'étape 210, une condition de sortie vers le haut d'accélération est testée. Comme il a été dit plus haut, la valeur de la position de la pédale d'accélérateur 40 peut être une valeur binaire donnée par un capteur 41 de position de pédale d'accélérateur. A l'étape 210, le programme vérifie si la valeur de FLAG2 est différente de la valeur nulle, de manière à déterminer si, une vitesse étant passée, le conducteur accélère ou non.

Lorsque la condition de sortie vers le haut d'accélérateur est vérifiée, l'exécution du programme passe à l'étape 220 consistant à vérifier une condition de sortie vers le haut de position de la pédale d'embrayage, étape 220 qui n'existe que si le véhicule est équipé d'un système manuel de changement de vitesses. Pour ce faire, à l'étape 220, la valeur de la position de la pédale d'embrayage donnée par le capteur discret 51 est lue. A l'étape 220, la valeur FLAG3 doit être différente de la valeur -1 de manière à ce que la condition de sortie vers le haut d'embrayage soit vérifiée, indiquant le couplage du moteur aux roues motrices. Lorsque cette condition logique de sortie est vérifiée, l'étape 230 permet de calculer un couple moteur théorique Cₜₕ en fonction de la pente p. Ce couple moteur théorique Cₜₕ est le couple permettant de maintenir le véhicule statique le long de la pente lorsque les freins sont relâchés. La dépendance entre Cₜₕ et p peut être obtenue au moyen de courbes de calibration.

L'exécution du programme passe ensuite à l'étape 240 qui permet de comparer le couple instantané C du moteur au couple théorique Cₜₕ calculé à l'étape 230. Dès que, la valeur du couple instantanée C est supérieure au couple théorique Cₜₕ, il y a un relâchement automatique de l'actionnement du système de freinage : à l'étape 250, la force de freinage théorique Fₜₕ prend la valeur nulle et à l'étape 260, la force de freinage théorique est affectée à la force de freinage cible F_{cible} qui est émise en direction des étriers ou du frein de parking du système de freinage. A l'issue de l'étape 260, l'exécution programme reprend, en E, au début avec l'évaluation d'une condition logique d'entrée. Si l'une des conditions de sortie vers le haut n'est pas vérifiée, le programme revient, en T, à l'étape 130 d'incrémentation de la variable temporelle t puis à l'étape 140 de comparaison.

Lorsque la sortie de l'étape 200 ne traduit pas une volonté du conducteur de monter la pente,le programme passe à l'étape 300 consistant à vérifier une deuxième condition de sortie de position de levier de vitesses. Si à l'étape 300 il est détecté que le levier de vitesses est au point mort (FLAG1=0), le programme passe, en T, dans la boucle 120 de temporisation, et le véhicule reste maintenu sur la pente par actionnement des freins.

Si, en revanche, à l'étape 300, FLAG1 n'est pas égal à 0, alors le programme passe à l'étape 350 de relâchement automatique de l'actionnement du système de freinage. Ici, le relâchement se fait de manière progressive pour ne pas surprendre le conducteur. A l'étape 350, la force de freinage théorique Fₜₕ est calculée comme une fonction décroissante du temps qui s'est écoulé depuis que la condition logique de sortie vers le bas a été vérifiée. A l'étape 260, la force de freinage théorique Fₜₕ est affectée à la force de freinage cible qui est ensuite émise en direction du système de freinage. Il est à noter que les étapes 350 et 260 nécessite de manière implicite une boucle temporelle pour actualiser en fonction d'une variable temporelle la force de freinage théorique Fₜₕ. Par ailleurs un test sur la valeur de la force de serrage requise par le conducteur F_{c} pourra être prévue de manière à ce que si le conducteur requiert une force de freinage supérieure à la force de freinage théorique calculée à l'étape 350, il doit pouvoir reprendre la main sur le système de freinage. Le programme reprend en E son exécution au début.

A l'issue de l'étape 260, le programme boucle en E pour reprendre son exécution au début.

Eventuellement, lorsque à l'étape 300, FLAG1 n'est pas égal à 0, alors le programme peut passer au test d'une condition de sortie vers le bas de position de la pédale d'embrayage. Si une vitesse est passée, mais que le moteur n'est pas couplé aux roues motrices, i.e. que la pédale d'embrayage est enfoncée, le véhicule pourra être entraîné dans la pente par son propre poids. En conséquence, à l'étape 310 (représentée en pointillés), la valeur du signal FLAG3 émis par le capteur de position de pédale d'embrayage est comparée à la valeur -1. Si FLAG3 est différent de -1, l'exécution du programme passe à l'étape 350. Enfin, si FLAG3 est différent de -1, le programme revient, en T, à l'étape 130 d'incrémentation de la variable temporelle t puis à l'étape 140 de comparaison.

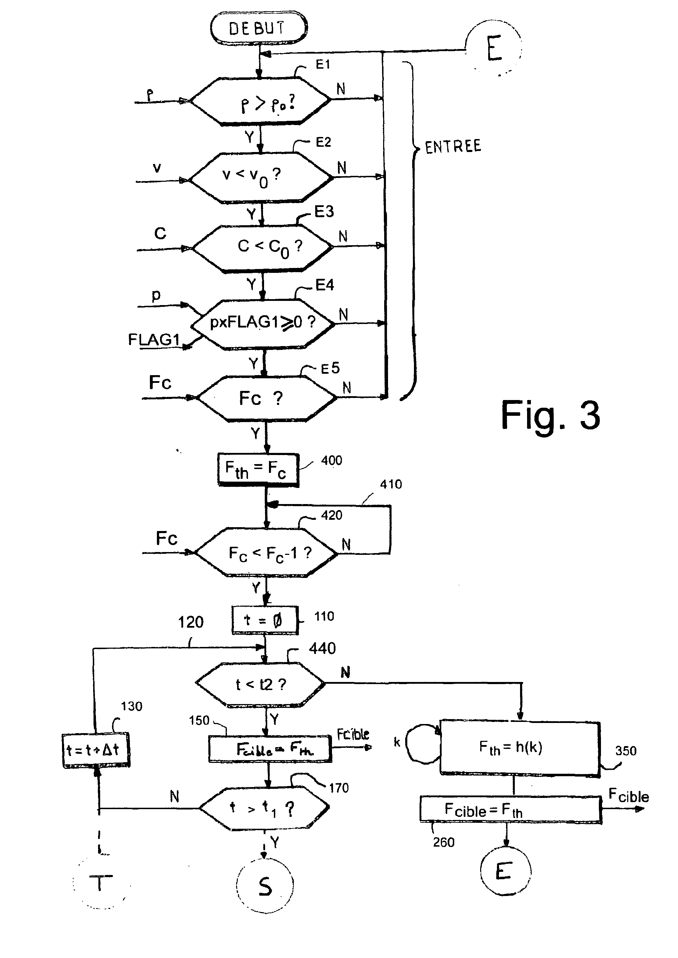

Sur la figure 3, on a représenté unautre mode de réalisation du procédé d'assistance à la conduite décrit sur les figures 2a et 2b. Cet autre mode de réalisation propose une première variante au niveau de calcul de la force de freinage théorique Fₜₕ et une deuxième variante au niveau de la sortie de l'actionnement du système de freinage.

Lorsque le conducteur souhaite être assisté, il appuie sur l'interrupteur 90. Le programme est alors exécuté par l'unité de calcul et débute par les étapes consistant à tester une condition logique d'entrée qui est vérifiée par la réunion d'une pluralité de conditions d'entrée. Dans cette variante, on retrouve les conditions d'entrée E1 à E4 décrite ci-dessus. Une condition d'entrée E3 supplémentaire porte sur l'actionnement de la pédale de frein : la condition d'entrée de pédale de frein est vérifiée lorsque le conducteur appuie sur la pédale de frein, c'est-à-dire lorsque la force de freinage requise F_{c} est différente de la valeur nulle.

Lorsque la condition logique d'entrée est vérifiée, le programme passe à l'étape 400. Puisque dans cet état d'entrée le véhicule est à l'arrêt et que le conducteur appuie sur la pédale de frein, cela signifie que la force de freinage requise F_{c} est suffisante pour maintenir le véhicule sur la pente. A l'étape 400, la valeur de la force de freinage requise F_{c} par le conducteur est affectée à la variable force de freinage théorique Fₜₕ.

Puis l'exécution du programme entre dans une boucle 410 permettant de détecter si le conducteur relâche la pédale de frein, la force de freinage requise F_{c} prenant alors une valeur inférieure à la force de freinage théorique Fₜₕ (étape 420). Dès que le conducteur relâche la pédale de frein, le programme d'assistance entre dans l'actionnement automatique du système de freinage. L'étape 400 permet d'obtenir une valeur de force de freinage théorique Fₜₕ à moindre coût.

L'exécution du programme pourrait se poursuivre comme cela a été décrit en relation avec les figures 2a et 2b. Selon une deuxième variante représentée à la figure 3, le programme comporte une comparaison 440 de la valeur de la variable temporelle t avec une troisième durée seuil t₂ prédéfinie par exemple de 2 secondes correspondant à une durée de latence. Tant que t est inférieure à t₂, le programme boucle sur l'actionnement du système de freinage. Cette boucle, tout comme la boucle 120, peut, éventuellement, comporter un test de l'existence d'une condition logique de sortie.

En revanche, dès que t est supérieure à t₂, le programme relâche progressivement les freins en émettant une requête de force de serrage qui est une fonction décroissante du temps (étapes 350 et 260). La condition testée à l'étape 440 constitue donc une condition de sortie temporelle faisant partie des conditions logiques de sortie.

Dans ce deuxième mode de réalisation, le système de freinage est actionné temporairement de manière à assister le conducteur, dès qu'il relâche la pédale de frein, pendant un temps prédéterminé suffisant pour lui permettre de réaliser tranquillement son démarrage en n'ayant plus à gérer la pédale de frein.

Ainsi, en comparant ces deux modes de réalisation décrits, pour l'actionnement du système de freinage, lorsque le conducteur fait appel au procédé d'assistance lorsque le véhicule arrive sur une pente :
- Soit le conducteur laisse le véhicule s'arrêter sans actionner la pédale de frein, au moins dans la phase finale de l'arrêt du véhicule. Dans ce cas, dès que la vitesse du véhicule est quasiment nulle, le système de freinage est actionné pour maintenir le véhicule statique sur la pente ;
- Soit le conducteur freine encore après l'arrêt du véhicule et dès qu'il lève le pied, le système de freinage est actionné pour maintenir le véhicule statique sur la pente.

Dans un deuxième temps, pour le relâchement du freinage :
- Soit le conducteur indique, dans le temps de latence, qu'il souhaite redémarrer vers le haut ou vers le bas, et l'actionnement automatique du système de freinage lui permet de n'avoir à utiliser que la pédale d'embrayage et la pédale d'accélérateur, et lui laisse un temps indéfini ou un temps prédéfini pour trouver le point de patinage et d'accélérer pour trouver le couple moteur adapté pour avancer ;
- Soit le conducteur ne fait rien dans un laps de temps prédéfini et si, le véhicule est équipé d'un système de frein de parking, celui-ci peut être actionné ou bien les freins sont progressivement relâchés.

Bien évidemment, pour des raisons de sécurité évidentes, le procédé selon l'invention n'est activé que si le contact est mis.

Bien que l'invention ait été décrite en liaison avec un mode de réalisation particulier, il est bien évident qu'elle n'y est nullement limitée à celui-ci et qu'elle comprend tous les équivalents techniques des moyens décrits ainsi que leurs combinaisons si celles-ci entrent dans le cadre de l'invention.

## Revendications

1. Procédé d'assistance à la conduite d'un véhicule, ledit véhicule étant équipé d'un système de freinage comportant des étriers de frein et/ou un frein de parking aptes à être actionnés en fonction d'une force de freinage cible (F_{cible}, F'_{cible}), ledit procédé étant **caractérisé en ce qu'**il comporte les étapes consistant à :
- déterminer un état instantané dudit véhicule défini par une pluralité de variables d'état dont les valeurs respectives sont obtenues à partir de mesures effectuées au moyen de capteurs équipant ledit véhicule ;
- tester une condition logique d'entrée traduisant que ledit état instantané correspond à un état d'entrée, par la vérification simultanée d'une pluralité de conditions d'entrée comportant au moins une condition d'entrée de vitesse (E2) vérifiée lorsque la vitesse (v) dudit véhicule est supérieure à une vitesse seuil (v₀), une condition d'entrée de pente (E1) vérifiée lorsque la pente (p) est supérieure à une pente prédéfinie (p₀) et une condition de position de levier de vitesses (E4) vérifiée lorsque la position d'un levier de vitesses (FLAG1) indique que ledit véhicule monte ladite pente; et, lorsque ladite condition logique d'entrée est vérifiée,
- tester une condition logique de sortie traduisant que ledit état instantané correspond à un état de sortie, par la vérification de conditions de sortie ; et,
- actionner automatiquement le système de freinage (150, 160) pour maintenir le véhicule statique sur la pente, tant que ladite condition logique de sortie n'est pas vérifiée ; et,
- relâcher automatiquement l'actionnement du système de freinage (260) lorsque ladite condition logique de sortie est vérifiée.

2. Procédé selon la revendication 1, **caractérisé en ce que** ladite pluralité de conditions d'entrée comporte une condition d'entrée de couple (E3) qui est vérifiée lorsqu'un couple moteur (C) est inférieur à un couple moteur seuil (C₀).

3. Procédé selon la revendication 1 ou la revendication 2 **caractérisé en ce que** ladite pluralité de conditions d'entrée comporte une condition d'entrée d'actionnement de la pédale de frein (E5) qui est vérifiée lorsqu'une force de freinage requise par le conducteur (F_{c}) permet de maintenir le véhicule sur la pente, ladite étape d'actionnement du système de freinage débutant uniquement lorsque il est détecté en une étape de détection (420) que le conducteur relâche la pédale de frein.

4. Procédé l'une quelconque des revendications 1 à 3, **caractérisé en ce qu'**il comporte les étapes consistant à, lorsque ladite condition logique d'entrée est vérifiée :
- mesurer la valeur instantanée de la pente (p); et,
- calculer (100) une force de freinage théorique (Fₜₕ) apte à maintenir ledit véhicule sur la pente,
ladite étape d'actionnement automatique du système de freinage (150, 160) étant réalisée en émettant ladite force de freinage théorique en tant que force de freinage cible (F_{cible}).

5. Procédé selon la revendication 3, **caractérisé en ce qu'**il comporte, dès que ladite condition logique d'entrée est vérifiée, une étape d'acquisition de la valeur de la force de freinage requise par le conducteur (F_{c}) en tant que force de freinage théorique (Fₜₕ), ladite étape d'actionnement automatiquement dudit système de frein (150, 160) étant réalisée en émettant la valeur de ladite force de freinage théorique en tant que force de freinage cible.

6. Procédé selon l'une quelconque des revendications 1 à 5, **caractérisé en ce qu'**il comporte les étapes consistant à :
- déterminer l'instant initial du début de l'étape d'actionnement automatique dudit système de frein (150);
- comparer (140, 440), à chaque instant, la durée (t) qui s'est écoulée depuis ledit instant initial à une durée seuil (t₀, t₂) dite de latence.

7. Procédé selon la revendication 6, **caractérisé en ce que** lorsque ladite durée (t) est supérieure à ladite durée seuil qui est une première durée seuil (t₀), ledit procédé comporte l'actionnement automatique (160) d'un frein de parking dont est équipé ledit véhicule.

8. Procédé selon la revendication 6, **caractérisé en ce que** ladite condition logique de sortie comporte une condition de sortie temporelle qui est vérifiée lorsque ladite durée (t) est supérieure à ladite durée seuil qui est une troisième durée seuil (t₂), et **en ce que** le procédé se poursuit par ledit relâchement progressif (350, 260) du système de freinage.

9. Procédé selon l'une quelconque des revendications 1 à 8, **caractérisé en ce que** ladite condition logique de sortie comporte une condition logique de sortie vers le haut traduisant une volonté du conducteur de monter la pente, ladite condition logique de sortie vers le haut étant définie par la vérification d'une pluralité de conditions de sortie vers le haut comportant au moins une condition de sortie vers le haut de position de levier de vitesses (200) qui est vérifiée lorsque le produit de la position du levier de vitesses (FLAG1) mesurée par un capteur de position de levier de vitesses (61) par le signe de la pente (p) est strictement positif.

10. Procédé selon la revendication 9, **caractérisé en ce que** ladite pluralité de conditions de sortie vers le haut comporte une condition de sortie vers le haut d'accélération (210) qui est vérifiée lorsque la valeur de la position de la pédale d'accélérateur (FLAG2) mesurée par un capteur de position de la pédale d'accélérateur (41) est supérieure à une position de référence, et une condition de sortie vers le haut de couple moteur qui est vérifiée lorsque qu'un couple moteur (C) effectivement atteint pas le moteur dudit véhicule est supérieur à un couple moteur théorique (Cₜₕ) évalué dans une étape de détermination d'un couple moteur théorique (230) consistant à calculer, en fonction de la pente (p), ledit couple moteur théorique apte à maintenir à lui seul ledit véhicule statique sur ladite pente.

11. Procédé selon la revendication 9 ou la revendication 10, **caractérisé en ce que** ladite pluralité de conditions de sortie vers le haut comporte une condition de sortie vers le haut d'embrayage (230) vérifiée lorsque la position de l'embrayage (FLAG3) donnée par un capteur de position d'embrayage (51) correspond à une position de point de patinage ou à une position totalement embrayée.

12. Procédé selon l'une quelconque des revendications 1 à 8, **caractérisé en ce que** ladite condition logique de sortie comporte une condition logique de sortie vers le bas traduisant une volonté du conducteur de descendre la pente, ladite condition logique de sortie vers le bas étant définie par la vérification simultanée d'une pluralité de conditions de sortie vers le bas comportant au moins une condition de sortie vers le bas de position de levier de vitesses (200, 300) qui est vérifiée lorsque le produit de la position du levier de vitesses mesurée par un capteur de position de levier de vitesses par le signe de la pente est strictement négatif.

13. Procédé selon l'une quelconque des revendications 1 à 12, **caractérisé en ce que**, dans ladite étape de relâchement automatique de l'actionnement du système de freinage (260, 350), ladite force de freinage est réduite progressivement vers la valeur nulle.

14. Logiciel d'assistance à la conduite contenant des instructions propres à être lues et stockées sur un support, lesdites instructions étant exécutables par un ordinateur hôte, **caractérisé en ce que** ledit logiciel met en oeuvre un procédé selon l'une quelconque des revendications 1 à 13.

15. Contrôleur de freinage programmable, apte à mettre en oeuvre un procédé selon l'une des revendications 1 à 13 dans un système de freinage d'un véhicule, comportant un espace mémoire apte à stocker des instructions d'un programme, un calculateur apte à exécuter lesdites instructions et une interface d'entrée/sortie connectable en entrée à une pluralité de capteurs dont est équipé ledit véhicule, et en sortie à au moins une unité d'actionnement d'étrier de frein dudit système de freinage, **caractérisé en ce que** ledit contrôleur est programmé pour comporter :
- un moyen de détermination d'un état instantané dudit véhicule, état défini par au moins une variable d'état obtenue à partir de mesures effectuées au moyen dudit au moins un capteur ;
- un moyen de test d'une condition logique d'entrée apte à éprouver si ledit état instantané vérifie une condition logique d'entrée ;
- un moyen de test d'une condition logique de sortie apte à éprouver si ledit état instantané vérifie une condition logique de sortie ;
- un moyen de génération et d'émission en sortie d'une valeur de force de freinage en tant que force de freinage cible ; et,
- un moyen d'incrémentation temps réel d'une variable temporelle.

16. Système de freinage destiné à équiper un véhicule comportant une pluralité de capteurs, un contrôleur de freinage, et des unités d'actionnement d'étriers de frein, **caractérisé en ce que** ledit contrôleur de freinage est un contrôleur de freinage programmable selon la revendication 15.

17. Système de freinage selon la revendication 15, **caractérisé en ce qu'**il comporte au moins des étriers de frein électromécaniques destinés à équiper des roues arrière dudit véhicule.

18. Véhicule comportant un système de freinage **caractérisé en ce que** ledit système de freinage est un système de freinage selon la revendication 16 ou la revendication 17.

## Revendications modifiées

### Revendications modifiées conformément à la règle 86(2) CBE.

**1.** Procédé d'assistance à la conduite d'un véhicule, ledit véhicule étant équipé d'un système de freinage comportant des étriers de frein et/ou un frein de parking aptes à être actionnés en fonction d'une force de freinage cible (F_{cible}, F'_{cible}), ledit procédé comportant les étapes consistant à :
- déterminer un état instantané dudit véhicule défini par une pluralité de variables d'état dont les valeurs respectives sont obtenues à partir de mesures effectuées au moyen de capteurs équipant ledit véhicule ;
- tester une condition logique d'entrée traduisant que ledit état instantané correspond à un état d'entrée, par la vérification simultanée d'une pluralité de conditions d'entrée comportant au moins une condition d'entrée de vitesse (E2), une condition d'entrée de pente (E1) vérifiée lorsque la pente (p) est supérieure à une pente prédéfinie (p₀); et,
- lorsque ladite condition logique d'entrée est vérifiée, tester une condition logique de sortie traduisant que ledit état instantané correspond à un état de sortie, par la vérification de conditions de sortie ; et,
- lorsque ladite condition logique d'entrée est vérifiée, actionner automatiquement le système de freinage (150, 160) pour maintenir le véhicule statique sur la pente, tant que ladite condition logique de sortie n'est pas vérifiée ; et,
- relâcher automatiquement l'actionnement du système de freinage (260) lorsque ladite condition logique de sortie est vérifiée,
**caractérisé en ce que** ladite condition d'entrée de vitesse (E2) est vérifiée lorsque la vitesse (v) dudit véhicule est inférieure à une vitesse seuil (v₀), ladite pluralité de conditions d'entrée comportant une condition de position de levier de vitesses (E4) vérifiée lorsque la position d'un levier de vitesses (FLAG1) en combinaison avec la pente mesurée (p) indique que ledit véhicule monte ladite pente ou est au point mort.

**2.** Procédé selon la revendication 1, **caractérisé en ce que** ladite pluralité de conditions d'entrée comporte une condition d'entrée de couple (E3) qui est vérifiée lorsqu'un couple moteur (C) est inférieur à un couple moteur seuil (C₀).

**3.** Procédé selon la revendication 1 ou la revendication 2 **caractérisé en ce que** ladite pluralité de conditions d'entrée comporte une condition d'entrée d'actionnement de la pédale de frein (E5) qui est vérifiée lorsqu'une force de freinage requise par le conducteur (F_{c}) permet de maintenir le véhicule sur la pente, ladite étape d'actionnement du système de freinage débutant uniquement lorsque il est détecté en une étape de détection (420) que le conducteur relâche la pédale de frein.

**4.** Procédé l'une quelconque des revendications 1 à 3, **caractérisé en ce qu'**il comporte les étapes consistant à, lorsque ladite condition logique d'entrée est vérifiée :
- mesurer la valeur instantanée de la pente (p); et,
- calculer (100) une force de freinage théorique (Fₜₕ) apte à maintenir ledit véhicule sur la pente,
ladite étape d'actionnement automatique du système de freinage (150, 160) étant réalisée en émettant ladite force de freinage théorique en tant que force de freinage cible (F_{cible}).

**5.** Procédé selon la revendication 3, **caractérisé en ce qu'**il comporte, dès que ladite condition logique d'entrée est vérifiée, une étape d'acquisition de la valeur de la force de freinage requise par le conducteur (F_{c}) en tant que force de freinage théorique (Fₜₕ), ladite étape d'actionnement automatiquement dudit système de frein (150, 160) étant réalisée en émettant la valeur de ladite force de freinage théorique en tant que force de freinage cible.

**6.** Procédé selon l'une quelconque des revendications 1 à 5, **caractérisé en ce qu'**il comporte les étapes consistant à :
- déterminer l'instant initial du début de l'étape d'actionnement automatique dudit système de freinage (150);
- comparer (140, 440), à chaque instant, la durée (t) qui s'est écoulée depuis ledit instant initial à une durée seuil (t₀, t₂) dite de latence.

**7.** Procédé selon la revendication 6, **caractérisé en ce que** lorsque ladite durée (t) est supérieure à ladite durée seuil qui est une première durée seuil (t₀), ledit procédé comporte l'actionnement automatique (160) d'un frein de parking dont est équipé ledit véhicule.

**8.** Procédé selon la revendication 6, **caractérisé en ce que** ladite condition logique de sortie comporte une condition de sortie temporelle qui est vérifiée lorsque ladite durée (t) est supérieure à ladite durée seuil qui est une troisième durée seuil (t₂), et **en ce que** le procédé se poursuit par ledit relâchement progressif (350, 260) du système de freinage.

**9.** Procédé selon l'une quelconque des revendications 1 à 8, **caractérisé en ce que** ladite condition logique de sortie comporte une condition logique de sortie vers le haut traduisant une volonté du conducteur de monter la pente, ladite condition logique de sortie vers le haut étant définie par la vérification d'une pluralité de conditions de sortie vers le haut comportant au moins une condition de sortie vers le haut de position de levier de vitesses (200) qui est vérifiée lorsque le produit de la position du levier de vitesses (FLAG1) mesurée par un capteur de position de levier de vitesses (61) par le signe de la pente (p) est strictement positif.

**10.** Procédé selon la revendication 9, **caractérisé en ce que** ladite pluralité de conditions de sortie vers le haut comporte une condition de sortie vers le haut d'accélération (210) qui est vérifiée lorsque la valeur de la position de la pédale d'accélérateur (FLAG2) mesurée par un capteur de position de la pédale d'accélérateur (41) est supérieure à une position de référence, et une condition de sortie vers le haut de couple moteur qui est vérifiée lorsque qu'un couple moteur (C) effectivement atteint pas le moteur dudit véhicule est supérieur à un couple moteur théorique (Cₜₕ) évalué dans une étape de détermination d'un couple moteur théorique (230) consistant à calculer, en fonction de la pente (p), ledit couple moteur théorique apte à maintenir à lui seul ledit véhicule statique sur ladite pente.

**11.** Procédé selon la revendication 9 ou la revendication 10, **caractérisé en ce que** ladite pluralité de conditions de sortie vers le haut comporte une condition de sortie vers le haut d'embrayage (230) vérifiée lorsque la position de l'embrayage (FLAG3) donnée par un capteur de position d'embrayage (51) correspond à une position de point de patinage ou à une position totalement embrayée.

**12.** Procédé selon l'une quelconque des revendications 1 à 8, **caractérisé en ce que** ladite condition logique de sortie comporte une condition logique de sortie vers le bas traduisant une volonté du conducteur de descendre la pente, ladite condition logique de sortie vers le bas étant définie par la vérification simultanée d'une pluralité de conditions de sortie vers le bas comportant au moins une condition de sortie vers le bas de position de levier de vitesses (200, 300) qui est vérifiée lorsque le produit de la position du levier de vitesses mesurée par un capteur de position de levier de vitesses par le signe de la pente est strictement négatif.

**13.** Procédé selon l'une quelconque des revendications 1 à 12, **caractérisé en ce que**, dans ladite étape de relâchement automatique de l'actionnement du système de freinage (260, 350), ladite force de freinage est réduite progressivement vers la valeur nulle.

**14.** Logiciel d'assistance à la conduite contenant des instructions propres à être lues et stockées sur un support, lesdites instructions étant exécutables par un ordinateur hôte, **caractérisé en ce que** ledit logiciel met en oeuvre un procédé selon l'une quelconque des revendications 1 à 13.

**15.** Contrôleur de freinage programmable, comportant un espace mémoire apte à stocker des instructions d'un programme, un calculateur apte à exécuter lesdites instructions et une interface d'entrée/sortie connectable en entrée à une pluralité de capteurs dont est équipé ledit véhicule, et en sortie à au moins une unité d'actionnement d'étrier de frein dudit système de freinage, ledit contrôleur étant programmé pour comporter :
- un moyen de détermination d'un état instantané dudit véhicule, état défini par au moins une variable d'état obtenue à partir de mesures effectuées au moyen dudit au moins un capteur ;
- un moyen de test d'une condition logique d'entrée apte à éprouver si ledit état instantané vérifie une condition logique d'entrée ;
- un moyen de test d'une condition logique de sortie apte à éprouver si ledit état instantané vérifie une condition logique de sortie ; et,
- un moyen de génération et d'émission en sortie d'une valeur de force de freinage en tant que force de freinage cible ;
**caractérisé en ce que** ledit contrôleur est apte à mettre en oeuvre un procédé selon l'une des revendications 1 à 13 dans un système de freinage d'un véhicule, ledit contrôleur étant programmé pour comporter un moyen d'incrémentation temps réel d'une variable temporelle.

**16.** Système de freinage destiné à équiper un véhicule comportant une pluralité de capteurs, un contrôleur de freinage, et des unités d'actionnement d'étriers de frein, **caractérisé en ce que** ledit contrôleur de freinage est un contrôleur de freinage programmable selon la revendication 15.

**17.** Système de freinage selon la revendication 15, **caractérisé en ce qu'**il comporte au moins des étriers de frein électromécaniques destinés à équiper des roues arrière dudit véhicule.

**18.** Véhicule comportant un système de freinage **caractérisé en ce que** ledit système de freinage est un système de freinage selon la revendication 16 ou la revendication 17.
